# EUROPEAN PATENT SPECIFICATION

(11) **EP 1 687 373 B1**
(45) Date of publication and mention of the grant of the patent: **12.03.2008**
(21) Application number: 04790749.8
(22) Date of filing: 20.10.2004
(51) Int. Cl.: C08L 23/14, C08L 23/16

(54) **POLYPROPYLENE PIPE**
POLYPROPYLENROHR
CONDUITE HAUTE PRESSION DE POLYPROPYLENE

(30) Priority: 24.10.2003 GB 0324837
(43) Date of publication of application: 09.08.2006
(73) Proprietor: INEOS Manufacturing Belgium NV, 2040 Antwerpen (BE)
(72) Inventor: HALLOT, Gaetane, Noella, Ghislaine, B-1853 Strombeek (BE); ROUYER, Virgile, Joel, Maurice, B-1330 Rixensart (BE)
(74) Representative: Smith, Julian Philip Howard
(86) International application number: PCT/EP2004/011955
(87) International publication number: WO 2005/040271

(56) References cited:
- EP-A- 0 603 723
- WO-A1-03/037981
- US-B1- 6 187 402
- US-B1- 6 221 974

## Description

This invention relates to pressure pipes made from polypropylene.

Polymer materials are frequently used for pipes for various purposes, such as fluid transport, eg water or natural gas, during which the fluid can be pressurised. The transported fluid may have varying temperatures, usually within the range of about 0°C to about 70°C. Such pipes are typically made of polyolefins, usually polyethylene or polypropylene. Because of the high temperatures involved, hot water pipes made from polyolefins have special requirements. The temperatures in a hot water pipe, typically used for plumbing and heating purposes, range from 30-70°C which means that the pipe must be able to withstand a higher temperature than that for a secure long term use. Peak temperatures may be as high as 100°C. According to the standard DIN 8078, a hot water pipe made of polypropylene homopolymer or random polypropylene copolymer must meet the requirement of at least 1000 h before failure at 95°C and 3.5 MPa pressure.

Polypropylene as piping material is mainly used in non-pressure applications (pipe and fittings) and profiles. There is a small volume used for pressure pipe, mainly hot water and industrial pipes. Pressure pipe resins require high stiffness (creep rupture strength), combined with a high resistance against slow crack growth as well as resistance to rapid crack propagation (impact toughness). The good thermal resistance of polypropylene compared with other polyolefins is particularly useful for applications such as the hot water pipes mentioned above. All three main types of propylene polymer, i.e. homopolymers, random copolymers and block copolymers are used. Homopolymers give the pipe good rigidity but the impact and stress cracking properties are not very good. Block copolymers give good impact properties but the stress crackling properties are like homopolymers due to the homopolymer matrix. Propyleneethylene random copolymers are used in pressure pipe application for hot water and industrial pipes. This is due to their improved stress-cracking resistance compared with propylene homopolymers and block copolymer. However these random copolymers have poor impact performance.

EP 1312623A discloses a pressure pipe having increased long-term pressure resistance which comprises a propylene copolymer containing 73-99 wt% propylene and 1-20 wt% of a C₄-C₈ olefin and/or up to 7 wt% ethylene, the copolymer being at least partially crystallised in the β-modification. Although it is mentioned that the copolymer may be bimodal, no details are given.

EP 603723A discloses a polymer composition comprising 70-98wt% of a crystalline homopolymer or copolymer of propylene with up to 10wt% ethylene or a C₄-C₁₀ olefin, and 2-30wt% of a copolymer of a C₄-C₁₀ olefin and 60-85wt% ethylene. The composition is said to have an optimum balance of transparency, impact and stiffness even at low temperatures, but no indication of its suitability for pressure pipes is given. The high level of ethylene in the second block would be expected to reduce the impact properties of the composition, thus rendering it unsuitable for pressure pipes.

We have discovered particular bimodal polypropylene resins which have excellent impact properties at low temperatures, and also very good stress crack resistance even at high temperature, and which do not require the use of a nucleating agent.

Accordingly in a first aspect the present invention provides a pressure pipe comprising a resin formed from:
A) 70 to 90 wt% of a random copolymer comprising units of propylene and from 0.2 to 5 wt% of units of 1-hexene, having an MFR of 0.1 - 5 g/10 min;
B) 10 to 30 wt% of an elastomer comprising units of propylene and from 30 to 55 wt% of units of ethylene,
the melt flow rate (MFR) of the resin is from 0.1 to 2 g/10mins.
In this specification the MFR is measured in accordance with ISO 1133 at 230°C under a weight of 2.16 kg. Preferably the MFR of the random copolymer fraction is from 0.2 to 3.5 g/10min. The 1-hexene content of the random copolymer fraction is preferably 0.5 to 2 wt%.

The resin of the present invention preferably comprises at least 80 % by weight of the random copolymer fraction, most preferably between 82 and 88 weight %.

The ethylene content of the elastomer fraction is preferably 40 to 50 wt%.

We have found that the above resin has excellent rigidity as shown by its flexural modulus and tensile properties, which should provide good creep resistance, combined with excellent environmental Stress crack resistance as shown by full notch creep test (FNCT) values. This combination of properties is particularly important for pressure pipes. FNCT is measured according to ISO DIS 16770.

The term "pipe" as used herein also includes pipe fittings, valves and all parts which are commonly necessary for e.g. a hot water piping system. Also included within the definition are single and multilayer pipes, where for example one or more of the layers is a metal layer and which may include an adhesive layer.

The pipes of the invention may additionally contain the usual auxiliary materials, such as up to 40 wt% fillers, 0.01 to 2.5 wt% stabilizers, 0.01 to 1 wt% processing aids, 0.1 to 1 wt% antistatic agents and 0.2 to 3 wt% pigments, plus reinforcing agents such as glass fibres (wt % being calculated as a function of PP content).
The propylene polymers used in the pipes of the invention may be obtained according to any known technique. Particularly advantageously, the propylene polymer used in the compounds according to the invention is prepared by polymerisation in at least two successive stages, one of the copolymers being prepared in the course of a first stage and the other copolymer being prepared, in the presence of the first, in the course of a subsequent polymerisation stage. Each of these stages may be effected in the same polymerisation medium or in different polymerisation media. Preferably, the preparation of copolymer (A) is carried out first, followed by the preparation of copolymer (B) in the presence of the copolymer (A) arising from the first stage. A particularly preferred mode of preparation of the propylene polymer used in the compounds consists of synthesising successively copolymer (A) then copolymer (B) in the presence of copolymer (A) by polymerisation in gaseous phase, in interconnected successive reactors functioning in agitated bed or preferably in fluidised bed node. This latter variant does not result in any agglomeration problems and leads to excellent particle size distribution of the propylene polymer used in the compounds according to the invention, so that generally at most 10% by weight of the propylene polymer particles have a size of at least 2000 µm, more particularly at most 20% by weight of the particles have a size of at least 1000 µm. Usually, the particle size distribution of the propylene polymer used in the compounds according to the invention is such that at most 30% by weight of particles have a size of at least 710 µm. The particle size distribution of the propylene polymer used in the compounds according to the invention has been determined by screening according to ASTM D 1921. The good morphology of the propylene polymer used in the compounds according to the invention prevents problems of discharging the polymerisation reactor and problems of feeding the extruders when making granules from these compounds.

The propylene polymer used in the compound according to the invention may be obtained by means of any sufficiently active and productive known catalytic system.

The catalytic systems preferred for preparing the compounds according to the invention comprise:
- a catalytic solid comprising as essential components magnesium, titanium and chlorine,
- an organoaluminium compound, preferably a trialkylaluminium, more particularly triethylaluminium,
- an electrodonor compound (external electrodonor) chosen generally from among alkoxysilanes of formula R¹ₙSi(OR²)₄₋ₙ in which R¹ represents a hydrocarbon group containing from 1 to 12 carbon atoms, R² represents a hydrocarbon grouping containing from 1 to 8 carbon atoms and n is 1, 2 or 3.

The alkoxysilanes preferred as external electrodonor are alkylalkoxy- and cycloalkylalkoxysilanes, and among these latter di- and trimethoxysilanes are quite particularly preferred. N-propyltrimethoxysilane, dicyclopentyldimethoxysilane and cyclohexylmethyldimethoxysilane give particularly good results.

The catalytic solids usable according to the invention are well known to one skilled in the art. They contain most often an electrodonor compound (internal electrodonor) chosen from among the mono- and diesters of carboxylic aromatic acids, preferably from among dialkyl phthalates, quite particularly diisobutylphthalate. The catalytic solids usable according to the present invention may also contain more or less substantial amounts of preformed polymers arising from a prepolymerisation stage effected at the time of the synthesis of said solid or at the time of a polymerisation stage preceding directly the making of the compounds according to the present invention.

The various constituents of the catalytic system are generally employed in such a way that the atomic ratio between the aluminium of the organoaluminium compound and the titanium of the catalytic solid is from 3 to 300, preferably from 10 to 250 and more particularly from 15 to 100. Moreover, the molar ratio between the aluminium of the organoaluminium compound and the electrodonor compound is generally from 0.5 to 60, preferably from 1 to 50, quite particularly from 2 to 30.

The other general conditions of polymerisation are well known to one skilled in the art. The temperature is generally from 20 to 150°C, preferably from 40 to 95°C, most often from 50 to 75°C. The polymerisation is generally effected at a pressure higher than atmospheric pressure, preferably from 1 to 30 x 10⁵ Pa.

The average molecular weight of the propylene polymer used in the compounds according to the invention may be regulated by adding one or more known molecular weight regulating agents such as hydrogen, diethylzinc, alcohols, ethers and alkyl halogenides. Hydrogen is the most commonly used.

The required amounts of monomers and of molecular weight regulating agent may be introduced continuously or discontinuously into the polymerisation medium.

The compounds according to the invention may possibly be subjected to one or more known treatments with water, an alcohol and/or a hydrocarbon diluent for the elimination of the catalytic residues and/or the low molecular weight fractions.

### Example 1

A propylene polymer was prepared containing 85% of a random copolymer (A) and 15% of an elastomer (B) (all percentages by weight). The copolymer (A) contained 98% of C3 and 2% of C2 and the elastomer (B) contained 55% of C3 and 45% of C2. The total C2 content of the propylene polymer was 7.3%.

The successive preparation of each of the copolymers (A) and (B) was performed in a 5 litre autoclave equipped with an agitating mobile effecting homogenisation of the gaseous reaction medium and containing propylene, ethylene and hydrogen. The automatic regulation of the monomers (C3 and C2) was effected so as to maintain constant the total pressure of the autoclave. The molar composition of the gaseous phase of the polymerisation autoclave, analysed by chromatography or mass spectrometry, made it possible to regulate the molar ratios of introduction between C3 and C2 into the gaseous phase of the autoclave. A sample of copolymer (A) was taken for analysis for the first trial.

The catalytic system, introduced under nitrogen into the reaction medium, contained:
- a catalytic solid comprising 2.6% by weight of Ti and 11% by weight of diisobutylphthalate supported on MgCl₂,
- triethylaluminium (TEAL), and
- dicyclopentadienyltrimethoxysilane.

The characteristics of the propylene polymer thus obtained appear in Table I below.

### Examples 2-4

Propylene polymers were prepared containing 85% of a random copolymer (A) and 15% of an elastomer (B) (all percentages by weight). The copolymer (A) contained about 98% of C3 and varying amounts of C6, and the elastomer (B) contained 55% of C3 and 45% of C2.

The successive polymerisation of each of the copolymers (A) and (B) was conducted using a supported catalyst as in Example 1 above at 70°C. Copolymer (A) was made in a suspension of C3+C6 liquid monomers where the liquid C6 content regulated the polymer C6 content. The pressure is maintained constant by the continuous addition of gaseous propylene. The pressure has to be constant so as to maintain the reaction medium composition. Following the polymerisation, the monomers were flashed off and the reaction mixture ventilated with N₂ to remove any traces of C6. The polymerisation of copolymer (B) was then conducted at 11 bar in a gas phase of C2+C3 where the C2 content regulated the polymer C2 content.

The characteristics of the propylene polymers thus obtained appear in Table 1 below.

### Mechanical properties

Mechanical properties relevant to pressure pipe performance were evaluated for the above resins and also for a commercially available pipe resin available from the applicants, ELTEX P ^{®}RF110, which is a standard impact copolymer having a similar melt flow range to the resins of the invention. Environmental stress crack resistance (ESCR) is determined by FNCT performed at 80°C under 4 MPa stress on 10x10 mm specimens taken from compressed plates comprising 1600 µm depth notches.

A Charpy impact energy test was also carried out at a temperature of -20°C using the procedures of ISO 179.

Tensile modulus and sigma yield were measured according to ISO 527, and flexural modulus was measured according to ISO 178.

The determination of dynamic viscosity is important for determining the processability of a resin and its suitability for extrusion. The measurements were made using a Rheometric Scientific ARES rheometer according to DIN 8078. This method has been extensively described in the literature devoted to polymer rheology (see e.g. W.W. Graessley, Chapter 3 in Physical Properties of Polymers, 2nd Edition, ACS Professional Reference Book, Washington DC, 1993). Tests are performed at 210°C, the value of the viscosity in the table below is taken at 0.01 rad/s.

The results of all the mechanical property measurements are shown in Table 1 below.

**TABLE 1**

| | | Ex.1 711 | Ex. 2 727 | Ex. 3 757 | Ex. 4 1086 | Ex. 5 RF110 (comp) |
|---|---|---|---|---|---|---|
| Copolymer (A) | wt% | 85 | 85 | 85 | 85 | 84 |
| Ethylene (A) | wt% | 2.0 | - | - | - | - |
| Hexene (A) | wt% | - | 1.0 | 2.0 | 0.8 | - |
| MFR(A) | g/10min | 2.5-3 | 2.5-3 | 2.5-3 | 0.5 | |
| Copolymer (B) | wt% | 15 | 15 | 15 | 15 | 16 |
| Ethylene (B) | wt% | 45 | 45 | 45 | 45 | |
| MFR (B) | g/10min | 0.0032 | 0.0305 | 0.0187 | 0.0166 | |
| Resin | | | | | | |
| Total C2 content | wt% | 7.3 | 6.4 | 7.1 | 6.5 | |
| MI₂ | g/10min | 1.0 | 1.4 | 1.2 | 0.3 | 0.8 |
| FNCT, 80°C, 4MPa | hours | 118 | 665 | 373 | 287 | 146 |
| Notched Charpy, -20°C | kJ/m² | 19.6 | 16 | 36.7 | 54.6 | 33.3 |
| Flexural modulus | MPa | 1027 | 1057 | 969 | 991 | 1247 |
| Tensile modulus | MPa | 1080 | 1126 | 988 | 1039 | 1341 |
| Sigma yield | MPa | 24.86 | 24.94 | 23.36 | 24.17 | 27.12 |
| Viscosity (210°C- 0.01 rad/s) | Pa.s | 21795 | | 17000 | 62750 | 33414 |

It can be seen that FNCT values for the resins of the invention, particularly those employing 1-hexene as comonomer in (A), are very good. A typical PE100 polyethylene pipe resin has an FNCT of approximately 250 hours under the same conditions. Charpy impact values are much superior to those of typical PE100 resins, whose values under the same conditions are usually about 7-8 kJ/m². With the good rigidity as shown by flexural modules and sigma yield, the resins of the invention arc particularly suited for use as pressure pipes.

## Claims

1. Pressure pipe comprising a resin formed from:
A) 70 to 90 wt% of a random copolymer comprising units of propylene and from 0.2 to 5 wt% of units of 1-hexene, having an MI₂ of 0.1. - 5 g/10 min;
B) 10 to 30 wt% of an elastomer comprising units of propylene and from 30 to 55 wt% of units of ethylene,
the MFR of the resin is from 0.1 to 2 g/10mins.

2. Pressure pipe according to claim 1, wherein the resin comprises at least 80 % by weight of the random copolymer fraction, preferably between 82 and 88 weight %.

3. Pressure pipe according to claim 1 or 2, wherein the MFR of the random copolymer fraction is from 0.2 to 3.5 g/10min.

4. Pressure pipe according to any preceding claim, wherein the 1-hexene content of the random copolymer fraction is 0.5 to 2 wt%.

5. Pressure pipe according to any preceding claim, wherein the ethylene content of the elastomer fraction is 40 to 50 wt%.

## Patentansprüche

1. Druckrohr, umfassend ein Harz, gebildet aus:
A) 70 bis 90 Gew.-% eines statistischen Copolymers, umfassend Propyleneinheiten und 0,2 bis 5 Gew.-% 1-Hexen-Einheiten, mit einer MI₂ von 0,1 - 5 g/10 min;
B) 10 bis 30 Gew.-% eines Elastomers, umfassend Propyleneinheiten und 30 bis 55 Gew.-% Ethyleneinheiten,
wobei die MFR des Harzes 0,1 bis 2 g/10 min beträgt.

2. Druckrohr nach Anspruch 1, wobei das Harz mindestens 80 Gew.-% der Fraktion des statistischen Copolymers, vorzugsweise zwischen 82 und 88 Gew.-%, umfaßt.

3. Druckrohr nach Anspruch 1 oder 2, wobei die MFR der Fraktion des statistischen Copolymers 0,2 bis 3,5 g/10 min beträgt.

4. Druckrohr nach einem vorhergehenden Anspruch, wobei der 1-Hexengehalt der Fraktion des statistischen Copolymers 0,5 bis 2 Gew.-% beträgt.

5. Druckrohr nach einem vorhergehenden Anspruch, wobei der Ethylengehalt der Elastomerfraktion 40 bis 50 Gew.-% beträgt.

## Revendications

1. Conduite sous pression comprenant une résine formée à partir :
A) 70 à 90 % en poids d'un copolymère statistique comprenant des unités propylène et de 0,2 à 5 % en poids d'unités 1-hexène, ayant un indice de fusion (MI₂) de 0,1 à 5 g/10 min ;
B) de 10 à 30 % en poids d'un élastomère comprenant des unités propylène et de 30 à 55 % d'unités d'éthylène,
l'indice de fluidité de la résine (MFR) étant de 0,1 à 2 g/10 min.

2. Conduite sous pression selon la revendication 1, dans laquelle la résine comprend au moins 80 % en poids d'une fraction de copolymère statistique, de préférence entre 82 et 88 % en poids.

3. Conduite sous pression selon l'une des revendications 1 ou 2, dans laquelle le MFR de la fraction de copolymère statistique est de 0,2 à 3,5 g/10 min.

4. Conduite sous pression selon l'une des revendications précédentes, dans laquelle la teneur en 1-hexène de la fraction de copolymère statistique est de 0,5 à 2 % en poids.

5. Conduite sous pression selon l'une des revendications précédentes, dans laquelle la teneur en éthylène de la fraction élastomère est de 40 à 50 % en poids.
